# EUROPÄISCHE PATENTSCHRIFT

(11) **EP 1 869 962 B1**
(45) Veröffentlichungstag und Bekanntmachung des Hinweises auf die Patenterteilung: **15.10.2008**
(21) Anmeldenummer: 07017834.8
(22) Anmeldetag: 21.10.2000
(51) Int. Cl.: A01C 15/00, A01C 15/12

(54) **Verteilmaschine**
Spreader
Epandeur

(30) Priorität: 29.10.1999 DE 19952117
(43) Veröffentlichungstag der Anmeldung: 26.12.2007
(62) Teilanmeldung aus: 00122940.0
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Hilter (DE); Dreyer, Justus, Dr., 49076 Osnabrück (DE)

(56) Entgegenhaltungen:
- US-A- 4 124 167
- US-A- 4 266 731
- US-A- 4 277 022
- US-A- 4 405 089
- US-A- 4 422 562

## Beschreibung

Die Erfindung betrifft eine Verteilmaschine gemäß des Oberbegriffes des Patentanspruches 1.

Eine derartige Verteilmaschine ist beispielsweise in der US 42 66 731 beschrieben. Diese als Streuer ausgebildete Verteilmaschine weist in der hinteren Wand des Vorratsbehälters oberhalb des angetriebenen Förderbandes eine durch einen Schieber einstellbare Auslauföffnung auf. Der Schieber ist mittels des Motors verstellbar, so dass die Auslauföffnung einstellbar ist. Es ist eine elektronische Regeleinrichtung zur Regelung der von dem Dosierorgan dosierten Materialmenge vorsehen.

Eine weitere Verteilmaschine ist beispielsweise in der DE-OS 195 20 452 beschrieben. Diese Verteilmaschine ist als Großflächendüngerstreuer ausgebildet. In der hinteren Wand des Vorratsbehälters sind oberhalb des angetriebenen Förderbandes zwei jeweils durch einen Schieber einstellbare Auslauföffnungen angeordnet.

Der Erfindung liegt die Aufgabe zugrunde durch ein leichtes Öffnen der Schieber mit einer geringen Kraft das Einstellmittel in jedem Falle sicherzustellen.

Diese Aufgabe wird erfindungsgemäß durch die Merkmale des Anspruches 1 gelöst. Infolge dieser Maßnahmen lässt sich über die Regeleinrichtung das Dosierorgan gezielt ansteuern und die auszubringende Materialmenge entsprechend den gegebenen Verhältnissen einstellen und regeln. Somit lässt sich der Schieber leicht öffnen und ein leichtes anlaufen des Förderorgans wird erreicht.

Um bei nicht ausbringen von Material, an den Stellen, wo keine Materialmenge ausgebracht werden soll, einen Materialstop vor der durch den Schieber geschlossenen Auslauföffnung zu vermeiden, ist vorgesehen, dass bei Einstellung der Ausbringmenge "Null" der Antrieb des Förderorgans vorzugsweise mittels Kuppelelementen stillsetzbar und/oder abschaltbar ist. Hierdurch wird das Material von dem Förderband nicht gegen den Schieber gepresst. Somit verbleibt lockeres Material vor dem die Auslauföffnung verschließenden Schieber, so dass der Schieber anschließend mit leichter Kraft durch das Einstellmittel verstellt werden kann.

Eine vorteilhafte Einstellung der Materialmenge, insbesondere bei Veränderung der Materialmenge wird dadurch erreicht, dass zur Einstellung der Ausbringmenge die Antriebsmittel des Förderbandes zur Einstellung der Fördergeschwindigkeit und die Einstellung des Schiebers einstellbar sind. Hierdurch kann die Förderbandgeschwindigkeit auf die Größe der Auslauföffnung oder umgedreht genau aufeinander abgestimmt werden, so dass ein optimales Einstellverhältnis von Förderbandgeschwindigkeit zur Öffnungsgröße jeweils einzustellen ist.

Um eine ausreichende Größe des Auslaufquerschnittes für die Auslauföffnung bei kleinen Ausbringmengen zu gewährleisten, ist vorgesehen, dass im unteren Ausbringmengenbereich vorrangig eine kleine Bandgeschwindigkeit in Verbindung mit der entsprechenden Schieberstellung gewählt wird.

Eine vorteilhafte Regelung der Ausbringmenge wird, wie Versuche gezeigt haben, dadurch erreicht, dass bei einer Vergrößerung der Ausbringmenge der Durchtrittsquerschnitt der Auslauföffnung durch die Verstellung des Schiebers mit einem Vorlauf gegenüber der Vergrößerung der Fördergeschwindigkeit des Förderbandes vergrößert wird, und dass bei einer Verringerung der Ausbringmenge die Fördergeschwindigkeit des Förderbandes mit einem Vorlauf gegenüber der Verkleinerung des Durchtrittsquerschnittes der Auslauföffnung durch die Verstellung des Schiebers verringert wird. Infolge dieser Maßnahmen wird vermieden, dass bei einer Veränderung der Ausbringmenge sich Material vor dem Schieber in nachteiliger Weise staut.

Um auf automatische Weise ein leichtes Öffnen des Schiebers und andererseits ein leichtes Anlaufen des Förderorgans in Förderrichtung zu erreichen, ist vorgesehen, dass dem Antrieb des Förderorgans eine Antriebsleistungs- und/oder Drehmomentmesseinrichtung zugeordnet ist, dass die Regeleinrichtung mit dieser Messeinrichtung verbunden ist, dass die Regeleinrichtung derart ausgelegt ist, dass bei Überschreiten bzw. Erreichen eines festgelegten Antriebsleistungs- und/oder Drehmomentgrenzwertes, das Förderorgan kurzzeitig entgegen der Förderrichtung antreibbar ist. Hierdurch erfolgt automatisch eine kurzzeitige Reversierung des Förderbandes nur dann, wenn das an der Förderorganantriebswelle anliegende Drehmoment einen bestimmten Wert überschreitet. Das Drehmoment kann direkt durch eine Drehmomentmesswelle oder indirekt über einen Druckabfall am Hydromotor oder einer Strom- und Spannungsänderung am Elektromotor ermittelt werden.

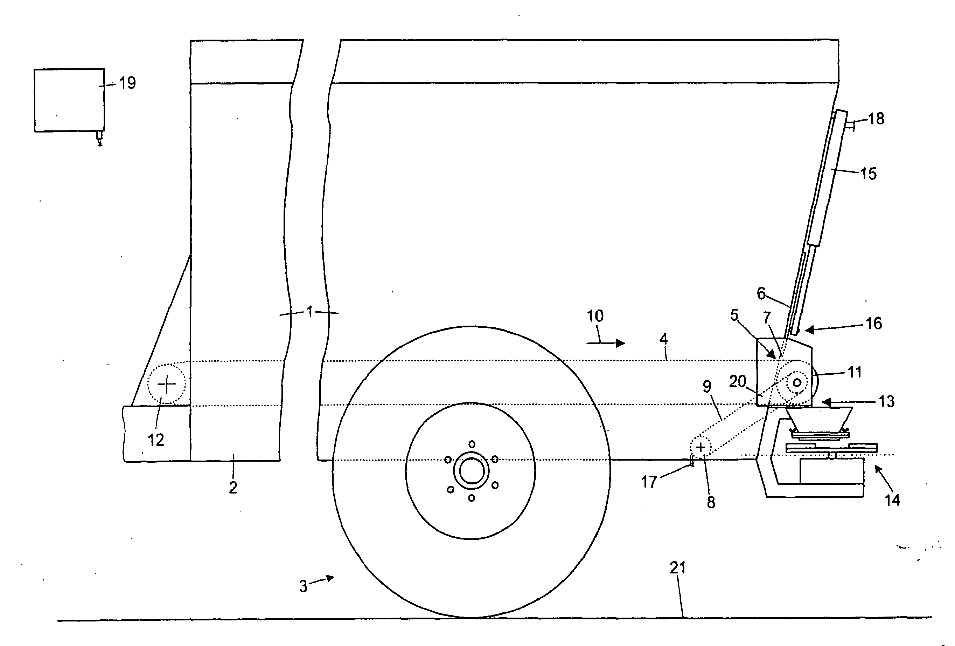

Weitere Einzelheiten der Erfindung sind der Beispielsbeschreibung und der Zeichnung zu entnehmen. Die Zeichnung zeigt
den Großflächendüngerstreuer in Seitenansicht und in Prinzipdarstellung.

Die als Großflächendüngerstreuer ausgebildete Verteilmaschine ist mit einem Vorratsbehälter 1, einem Rahmen 2 und einem Fahrwerk 3 ausgestattet. In dem unteren Bereich des Vorratsbehälters 2 befindet sich zumindest ein antreibbares und als Förderband 4 ausgebildetes Förderorgan. Im hinteren Bereich 5 des Vorratsbehälters 1 sind die beiden nebeneinander jeweils über einen Schieber 6 einstellbaren Auslauföffnungen 7 angeordnet. Das Förderband 4 wird mittels des Antriebsmotors 8 und der Übertragungseinrichtung 9 in der Förderrichtung 10 angetrieben. Dieses Förderband 4 wird über die Antriebsrolle 11 angetrieben und über die Umlenkrolle 12, die im vorderen Bereich angeordnet ist, umgelenkt. Unterhalb des hinteren Endes 13 des Förderbandes 4 ist das als Scheibenstreuwerk ausgebildete Streuorgan 14 angeordnet. Die Schieber 6, mittels denen die Auslauföffnungen 7 einstellbar sind, sind mittels der als Elektromotoren ausgebildeten Einstellmittel 15 einstellbar. Die Auslauföffnungen 7 bilden zusammen mit dem einstellbaren Schieber 6 das Dosierorgan 16.

Der Antriebsmotor 8 und die Einstellmittel 15 sind über Verbindungselemente 17 und 18, die als Kabel ausgebildet sind, mit der elektronischen Regeleinrichtung 19 verbunden. Der elektronischen Regeleinrichtung 19 werden Signale über den zurückgelegten Weg bzw. der Fahrgeschwindigkeit sowie der Größe der eingestellten Querschnitte der Auslauföffnungen 7 sowie die Fördergeschwindigkeit des Förderbandes 4 übermittelt.

Mittels der Regeleinrichtung 19 werden die Einstellmittel 15 und der Antriebsmotor 8 für das Förderorgan angesteuert und entsprechend eingestellt.

Die Funktionsweise der Verteilmaschine ist folgende:

In der Regeleinrichtung 19 sind die Abhängigkeiten von Fördergeschwindigkeit des Förderbandes 4 und Auslauföffnungen 7 eingespeichert, so dass aufgrund dieser Werte die auszubringende Materialmenge durch Ansteuern der Einstellmittel 15 für den jeweiligen Schieber 6 und der Einstellorgane für das Antriebsorgan 8 des Förderbandes 4 eingestellt werden können. Somit ist also zur Regelung der von dem Dosierorgan 16 dosierten Menge die elektronische Regeleinrichtung 19 vorgesehen. Hierbei ist die Regeleinrichtung 19 derart ausgelegt, dass bei Einstellung der Ausbringmenge "Null" der Antrieb des Förderorgans 4 durch Stillsetzen des Antriebsmotors 8 stillgesetzt bzw. abgeschaltet wird. Wenn der Antriebsmotor 8, wie im Ausführungsbeispiel ein Hydraulikmotor ist, wird über die hydraulischen Einstellelemente die Ölzufuhr zu dem Hydraulikmotor 8 unterbrochen. Wenn das Förderband 4 von der Schlepperzapfwelle über eine mechanische Antriebsübertragungseinrichtung angetrieben wird, ist in dem Antriebsstrang eine Kupplung angeordnet, mittels welche das Förderorgan 4 abgeschaltet werden kann. Bei einer mechanischen Antriebsverbindung ist in dem Antriebsstrang ein Schaltgetriebe und stufenlos regelbares Einstellgetriebe angeordnet, um die Fördergeschwindigkeit des Förderbandes 4 einstellen zu können.

Die Regeleinrichtung 19 ist derart ausgelegt, dass zur Einstellung der Ausbringmenge die Antriebsmittel 8 des Förderbandes 4 zur Einstellung der Fördergeschwindigkeit und die Einstellmittel 15 des Schiebers 6 einstellbar sind, in dem die Einstellorgane des Hydraulikmotors 8 bzw. die Einstellmittel 15 für die Schieber 6 entsprechend angesteuert werden. Hierbei wird im unteren Ausbringmengenbereich vorrangig eine kleine Bandgeschwindigkeit des Förderbandes 4 in Verbindung mit einer Schieberstellung des jeweiligen Schiebers 6, die die gewünschte Ausbringmenge gewährleistet, gewählt.

Wenn während des Ausbringens die Ausbringmenge vergrößert werden soll, werden jeweils zunächst mit einem Vorlauf die Einstellmittel 15 der Schieber 6 angesteuert, so dass die Schieber 6 verstellt werden, um den Durchtrittsquerschnitt der Auslauföffnungen 7 zu vergrößern, bevor die Fördergeschwindigkeit des Förderbandes 4 vergrößert wird. Wenn die Ausbringmenge während des Ausbringens verringert werden soll, wird zunächst mit einem Vorlauf die Fördergeschwindigkeit des Förderbandes 4 gegenüber der Verkleinerung des Durchtrittsquerschnittes der Auslauföffnung 7 durch Verstellung des jeweiligen Schiebers 6 verringert. Hierzu werden die Einstellmittel 15 für den Schieber 6 nach dem Antriebsmittel 8 für das Förderorgan 4 angesteuert. Durch diese entsprechende Steuerung, die in der Regeleinrichtung 19 hinterlegt ist, wird vermieden, dass bei einer Ausbringmengenänderung sich ein Materialstau vor dem jeweiligen Schieber 6 bildet. Der Schieber 6 ist durch die erfindungsgemäße Ansteuerungsreihenfolge von Schieber 6 oder Förderband 4 immer leicht bewegbar, da sich nur loses Material und kein sich stauendes Material vor dem Schieber 6 befindet.

Wenn nur ein gemeinsames Förderband 4 für beiden Auslauföffnungen 7 und die beiden zugeordneten Schieber 6 vorhanden ist, ist bei einer einseitigen Ausbringmengenänderung durch Verstellung eines Schiebers 6 und einer Förderbandgeschwindigkeitsänderung eine entsprechende Verstellung des anderen Schiebers 6 zur Gewährleistung der gewünschten Ausbringmenge entsprechend erforderlich.

Wenn nach einer längeren Transportfahrt ohne Ausbringen von Material mit dem Ausbringen des Materials begonnen werden soll, wird durch die Regeleinrichtung 19 das Förderorgan 4 zunächst kurzzeitig entgegen der Förderrichtung 10 vor dem Beginn des Öffnens der Auslauföffnung 7 durch die Verstellung des Schiebers 6 betätigt, damit Material aus dem Bereich der Auslauföffnung 7 vor dem Schieber 6 abgezogen wird, so dass sich hier nur noch lockeres und loses Material oder ein Hohlraum bildet, damit mittels der Einstellmittel 15 die Schieber 6 leicht bewegt werden können. Auch wird hierdurch ein leichteres Anlaufen des Förderorgans 4 in Förderrichtung 10 erreicht. Bevor jetzt das Förderorgan 4 in Förderrichtung 10 angetrieben wird, wird der Schieber 6 mittels der Einstellmittel 15 durch Ansteuerung durch die Regeleinrichtung 19 in seine Öffnungsstellung gebracht, damit der jeweilige Schieber 6 mit leichter Kraft verstellt werden kann.

Um eine Überlastung des Antriebsstranges 8, 9 zu vermeiden, ist in dem Antrieb des Förderorgans 4 eine nicht dargestellte Antriebsleistung- und/oder Drehmomentmesseinrichtung angeordnet, die das auftretende Drehmoment bzw. die anliegende Leistung misst. Hierbei ist in der Regeleinrichtung 19 ein festgelegter Antriebsleistung- und/oder Drehmomentgrenzwert eingespeichert. Wenn dieser Grenzwert erreicht bzw. überschritten wird, wird das Förderorgan 4 kurzzeitig entgegen der Fördereinrichtung 10 angetrieben, um das Material aufzulockern. Erforderlichenfalls wird das Förderorgan 4 im Reversierbetrieb mehrfach in einander entgegengesetzten Richtungen kurzzeitig hin und her angetrieben, um eine Auflockerung des Materials vor der Auslauföffnung 7 und in einer kleinen Schicht im Bereich oberhalb des Förderorgans 4 zu erreichen, um ein so leichtes Anlaufen und Antreiben des Förderorgans 4 zu erreichen.

In manchen Fällen kann es sinnvoll sein, einen sogenannten Totzeitabgleich in der Regeleinrichtung 19 zu berücksichtigen. Wenn der jeweilige Schieber in Richtung Schließen bewegt wird, wirkt sich dieses auf den Förderstrom, welcher dem Streuorgan 14 zugeführt wird, verzögert aus (sog. Totzeit). Durch eine kurzzeitige Veränderung der Fördergeschwindigkeit des Förderbandes 4, in dem das Antriebsorgan 8 des Förderorgans 4 von der Regeleinrichtung 19 entsprechend angesteuert wird, kann diese Totzeit kompensiert werden. Dieses bedeutet, dass bei einer Reduzierung der Ausbringmenge neben einer Verstellung des Schiebers 6 kurzzeitig eine überproportionale Reduzierung der Bandgeschwindigkeit des Förderbandes 4 durch eine entsprechende Ansteuerung des Antriebsorgans 8 des Förderorgans 4 erfolgt. Bei einer Vergrößerung der Ausbringmenge wird kurzzeitig eine überproportionale Vergrößerung der Bandgeschwindigkeit des Förderorgans 4 durch eine entsprechende Ansteuerung des Antriebsorgans des Förderorgans durch die Regeleinrichtung 19 erreicht, so dass auch hier dann die Totzeit entsprechend ausgeschaltet wird.

## Patentansprüche

1. Verteilmaschine mit einem Vorratsbehälter (1), dessen unterer Boden (2) zumindest ein von einem mittels Antriebsmitteln (8) in einstellbarer Weise antreibbaren umlaufenden, vorzugsweise als Förderband ausgebildeten Förderorgan (4) gebildet wird, welches zusammen mit zumindest einer mittels Schieber (6) einstellbaren Auslauföffnung (7) das Dosierorgan bildet, welches das sich im vorratsbehälter (1) befindliche Material zumindest einer Verteileinrichtung (14) zuführt, wobei eine elektronische Regeleinrichtung (19) zur Regelung der von dem Dosierorgan (16) dosierten Materialmenge vorgesehen ist, **dadurch gekennzeichnet, dass** die Regeleinrichtung (19) derart ausgelegt ist, dass vor dem Beginn des Öffnens der Durchtrittsöffnung (7) durch die Verstellung des Schiebers (6) das Förderorgan (4) zumindest einmal zunächst kurzzeitig in der der Förderrichtung (10) entgegengesetzten Richtung antreibbar ist, bevor das Förderorgan (4) in Förderrichtung (10) antreibbar ist, und dass vor dem Antreiben des Förderorgans (4) in Förderrichtung (10) der Schieber (6) mittels der Einstellmittel (15) durch Ansteuerung durch die Regeleinrichtung (19) in seine Öffnungsstellung bringbar ist.

2. Verteilmaschine nach Anspruch 1, **dadurch gekennzeichnet, dass** die Regeleinrichtung derart ausgelegt ist, dass bei Einstellung der Ausbringmenge "Null" der Antrieb (8) des Förderorgans (4) vorzugsweise mittels Kuppelelementen stillsetzbar und/oder abschaltbar ist.

3. Verteilmaschine nach einem oder mehreren der vorstehenden Ansprüche, **dadurch gekennzeichnet, dass** die Regeleinrichtung (19) derart ausgelegt ist, dass zur Einstellung der Ausbringmenge die Antriebsmittel (8) des Förderbandes (4) zur Einstellung der Fördergeschwindigkeit und die Einstellmittel (15) des Schiebers (6) einstellbar sind.

4. verteilmaschine nach einem oder mehreren der vorstehenden Ansprüche, **dadurch gekennzeichnet, dass** im unteren Ausbringmengenbereich vorrangig eine kleine Bandgeschwindigkeit in Verbindung mit einer Schieberstellung gewählt wird.

5. Verteilmaschine nach einem oder mehreren der vorstehenden Ansprüche, **dadurch gekennzeichnet, dass** bei einer Vergrößerung der Ausbringmenge der Durchtrittsquerschnitt der Auslauföffnung (7) durch die Verstellung des Schiebers (6) mit einem Vorlauf gegenüber der Vergrößerung der Fördergeschwindigkeit des Förderbandes (4) vergrößert wird, und dass bei einer Verringerung der Ausbringmenge die Fördergeschwindigkeit des Förderbandes (4) mit einem Vorlauf gegenüber der Verkleinerung des Durchtrittsquerschnittes der Auslauföffnung (7) durch die Verstellung des Schiebers (6) verringert wird.

6. Verteilmaschine nach einem oder mehreren der vorstehenden Ansprüche, **dadurch gekennzeichnet, dass** dem Antrieb (8) des Förderorgans (4) eine Antriebsleistungs- und/oder Drehmomentmesseinrichtung zugeordnet ist, dass die Regeleinrichtung (19) mit dieser Messeinrichtung verbunden ist, dass die Regeleinrichtung (19) derart ausgelegt ist, dass bei Überschreiben bzw. Erreichen eines festgelegten Antriebsleistungs- und/oder Drehmomentgrenzwertes, das Förderorgan (4) kurzzeitig entgegen der Förderrichtung (10) antreibbar ist.

## Revendications

1. Machine distributrice comportant un réservoir d'alimentation (1) dont le fond (2) comporte au moins un organe de transfert (4) de préférence en forme de bande transporteuse tournante, entraînée de façon réglable par des moyens d'entraînement (8),
cet organe de transfert (4) constituant l'organe de dosage avec au moins un orifice de sortie (7) réglable à l'aide d'un tiroir (6), cet organe de dosage fournissant le produit du réservoir d'alimentation à au moins une installation de distribution (14),
une installation de régulation électronique (19) étant prévue pour réguler la quantité de matière dosée par l'organe de dosage,
**caractérisée en ce que**
l'installation de régulation (19) est conçue pour qu'avant le début de l'ouverture de l'orifice de passage (7) par le déplacement du tiroir (6), l'organe de transfert (4) soit entraîné au moins une fois tout d'abord brièvement dans la direction opposée à la direction de transfert (10) avant que l'organe de transfert (4) ne soit entraîné dans la direction de transfert (10), et
pour qu'avant l'entraînement de l'organe de transfert (4) dans la direction de transfert (10), le tiroir (6) soit mis avec les moyens de réglage (15) dans sa position d'ouverture par la commande par l'installation de régulation (19).

2. Machine distributrice selon la revendication 1,
**caractérisée en ce que**
l'installation de régulation est conçue pour qu'en réglant la quantité à distribuer "zéro", l'entraînement (8) de l'organe de transfert (4) pour une position de réglage de la quantité à distribuer "zéro" est de préférence arrêté et/ ou coupé par des éléments de couplage.

3. Machine distributrice selon les revendications précédentes,
**caractérisée en ce que**
l'installation de régulation (19) est conçue de façon que pour régler la quantité à distribuer, le moyen d'entraînement (8) de la bande transporteuse (4) puisse être réglé pour régler la vitesse de transfert et les moyens de réglage (15) du tiroir (6).

4. Machine distributrice selon les revendications précédentes,
**caractérisée en ce que**
dans la plage inférieure des quantités distribuées, on sélectionne prioritairement une petite vitesse de défilement de la bande en combinaison avec une position du tiroir.

5. Machine distributrice selon les revendications précédentes,
**caractérisée en ce qu'**
en augmentant la quantité distribuée on augmente la section de passage de l'orifice de sortie (7) par le réglage du tiroir (6) avec une avance par rapport à l'augmentation de la vitesse de transfert de la bande transporteuse (4), et
en cas de réduction de la quantité à distribuer, on diminue la vitesse de transfert de la bande transporteuse (4) en avance par rapport à la réduction de la section de passage de l'orifice de sortie (7) par le réglage du tiroir (6).

6. Machine distributrice selon les revendications précédentes,
**caractérisée en ce qu'**
on associe une installation de mesure de puissance motrice et/ou de mesure de couple à l'entraînement (8) de l'organe de transfert (4), l'installation de régulation (19) étant reliée à cette installation de mesure,
l'installation de régulation (19) est conçue pour qu'en cas de dépassement ou lorsqu'on atteint la valeur limite fixée de la puissance motrice et/ou du couple, l'organe de transfert (4) est entraîné brièvement dans la direction opposée à la direction de transfert (10).

## Claims

1. Distributing machine, having a hopper (1), the lower base (2) of which is formed by at least one circulatory conveying member (4), which is drivable by means of driving means (8) in an adjustable manner and is preferably in the form of a conveyor belt, which conveying member forms, together with at least one outlet aperture (7) which is adjustable by means of slider (6), the metering member which supplies the material, situated in the hopper (1), to at least one distributing unit (14), an electronic control unit (19) being provided to control the quantity of material metered by the metering member (16), **characterised in that** the control unit (19) is designed in such a manner that, prior to the through-aperture (7) beginning to open by the displacement of the slider (6), the conveying member (4) is initially temporarily drivable, at least once, in the direction opposite the conveying direction (10) before the conveying member (4) is drivable in the conveying direction (10), and **in that**, prior to the conveying member (4) being driven in the conveying direction (10), the slider (6) can be brought into its open position by means of the setting means (15) by actuation through the control unit (19).

2. Distributing machine according to claim 1, **characterised in that** the control unit is designed in such a manner that, when the output quantity "zero" is set, the drive (8) of the conveying member 4) can preferably be stopped and/or switched-off by means of coupling elements.

3. Distributing machine according to one or more of the preceding claims, **characterised in that** the control unit (19) is designed in such a manner that, in order to set the output quantity, the driving means (8) of the conveyor belt (4) for setting the conveying speed and the setting means (15) of the slider (6) can be set.

4. Distributing machine according to one or more of the preceding claims, **characterised in that**, in the lower range of the output quantity, a small belt speed is predominantly selected in conjunction with a slider position.

5. Distributing machine according to one or more of the preceding claims, **characterised in that**, when the output quantity is increased, the cross-sectional area of the outlet aperture (7) is increased by displacing the slider (6) with a forward movement as compared with increasing the conveying speed of the conveyor belt (4), and **in that**, when the output quantity is reduced, the conveying speed of the conveyor belt (4) is reduced by displacing the slider (6) with a forward movement as compared with reducing the cross-sectional area of the outlet aperture (7).

6. Distributing machine according to one or more of the preceding claims, **characterised in that** a driving power measuring unit and/or torque measuring unit is associated with the drive (8) of the conveying member (4), **in that** the control unit (19) is connected to said measuring unit, **in that** the control unit (19) is designed in such a manner that, when a fixed driving power limit value and/or torque limit value is exceeded or reached, the conveying member (4) is temporarily drivable in opposition to the conveying direction (10).
